Europäisches Patentamt

European Patent Office

Office européen des brevets

(11) Publication number: **0 113 585**
**A1**

(12) # EUROPEAN PATENT APPLICATION

(21) Application number: **83307927.0**

(22) Date of filing: **23.12.83**

(51) Int. Cl.³: **A 01 C 3/06**

(30) Priority: **29.12.82 IE 1561/82**

(43) Date of publication of application:
**18.07.84 Bulletin 84/29**

(84) Designated Contracting States:
**AT BE CH DE FR GB IT LI LU NL SE**

(71) Applicant: **Kavanagh, Nicholas Patrick**

**Rathlee County Sligo(IE)**

(72) Inventor: **Kavanagh, Nicholas Patrick**

**Rathlee County Sligo(IE)**

(74) Representative: **Ashmead, Richard John et al,**
**KILBURN & STRODE 30 John Street**
**London, WC1N 2DD(GB)**

(54) **Material spreaders.**

(57) A manure spreader comprising a container (10) supported in a supporting frame (16), manure spreading means (20) and attachment means 30 secured to the supporting frame (16) for mounting the spreader on an agricultural tractor, so that the entire weight of the spreader and its contents is borne by the tractor. The supporting frame (16) consists of two triangular end frames (17) and the elongated members (18) connecting the vertices of the triangular end frames. The spreading means (20) comprises a rotatable shaft (22) having a plurality of flails (24) and the attachment means (30) comprises three connecting points (31, 32 and 32a) at the vertices of one of the triangular end frames (17).

EP 0 113 585 A1

./...

FIGURE 1

- 1 -

A MANURE SPREADER

The present invention relates to a manure spreader comprising a container having an opening through which manure is charged and discharged, a rotatable shaft in the container having a plurality of members for discharging manure through the opening and means for operatively connecting the rotatable shaft to a prime mover.

The spreader of this invention is intended primarily for spreading farmyard manure, but it may also be used for spreading other aggregated fertilizing material such as seaweed, ground limestone and the like.

Manure spreaders can generally be classified as either one of two types, namely vacuum spreaders or mechanical spreaders. Both types of spreaders comprise a substantially cylindrical container with wheels mounted beneath the container to allow the spreader to be towed behind an agricultural tractor. The spreading mechanism of each type of spreader is usually operated by the power take-off shaft of the tractor.

A major disadvantage with known spreaders is that, when fully laden, they may weigh up to five tonnes and so cannot be carried onto wet land. Consequently, farmyard manure produced during the winter must be stored until such time as the land to be fertilized is dry enough to take the weight of the laden manure spreader

- 2 -

so as to reduce the risk of (1) damaging the land and (2) the spreader becoming bogged down in wet land. A further disadvantage is that such spreaders are difficult to manoeuvre in confined spaces.

The invention provides a manure spreader in which the container is secured to and supported within a supporting frame which is adapted to be connected to and to be carried by the prime mover.

The advantages offered by the invention are that the manure spreader may be manoeuvred easily into cattle sheds and the like and may be driven onto wet land provided that the land is firm enough to support the prime mover.

Advantageously, the spreader has attachment means which comprise three connecting points which are adapted for connection to the three point linkage of an agricultural tractor.

Preferably, the container is cylindrical and the supporting frame comprises two triangular end frames and a plurality of elongated members connecting the end frames, each of the end frames being secured to a respective end of the container. The three connecting points are conveniently provided at the vertices of one of the end frames.

Preferably, the members for discharging manure through the opening of the container comprise a plurality of flails.

Conveniently, each flail comprises a chain and a T-shaped flail head, one end of the chain being secured to the flail head and the other end of the chain being secured to securing means on the rotatable shaft.

A splash guard may be mounted on the container adjacent the prime mover. Preferably, the splash guard is detachably mounted on the container.

The invention will now be more particularly described with reference to the accompanying drawings, which show by way of example only, one embodiment of the invention.

In the drawings:

Figure 1 is a perspective view of a manure spreader according to the invention; and

Figure 2 is a perspective view of part of manure spreading means of the spreader.

Referring to the drawings, the manure spreader comprises a substantially cylindrical container 10, manure spreading means 20 and attachment means 30 for mounting the spreader on a prime mover such as an agricultural tractor (not shown).

The container 10 is manufactured from sheet steel 4.75 mm thick, is approximately 1.25 m long and has a diameter of approximately 0.9 m which dimensions are considerably smaller than the dimensions of conventional prior art manure spreaders. An opening 12 is provided

- 4 -

on one side of the container 10 to allow the container to be charged with manure. The manure is later discharged through the opening 12 by the manure spreading means 20. To strengthen the container 10, two reinforcing bars 14 are secured to the outside wall of the container 10. The opening 12 may be closed by means of a lid 15 which is hinged to the container 10.

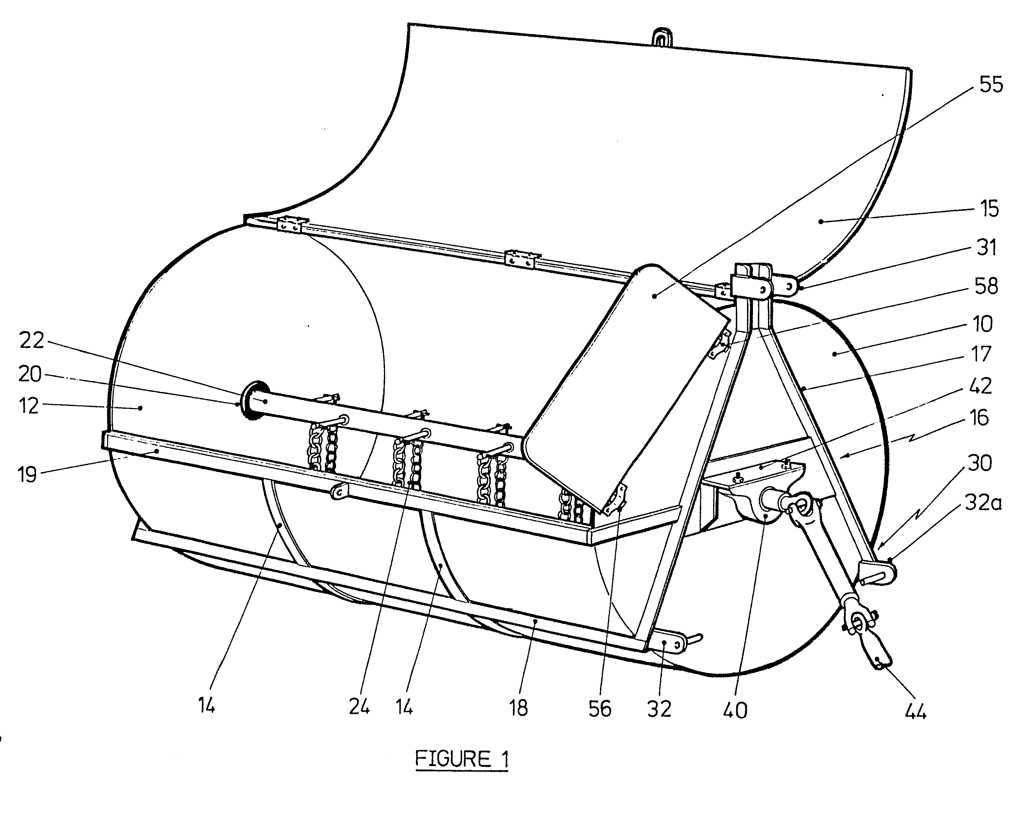

The container 10 is contained within and supported by a supporting frame 16 which comprises two triangular end frames 17 and three elongate members 18 connecting the vertices of the triangular end frames. (Only one frame 17 and one member 18 are shown in Figure 1). Also at the vertices of the end frame 17, shown in Figure 1, are the attachment means 30, comprising three connecting points 31,32, and 32a, adapted for connection to the three point linkage of an agricultural tractor.

The lower edge of the opening 12 is also supported by a strengthening member 19, which is connected to the two end frames 17.

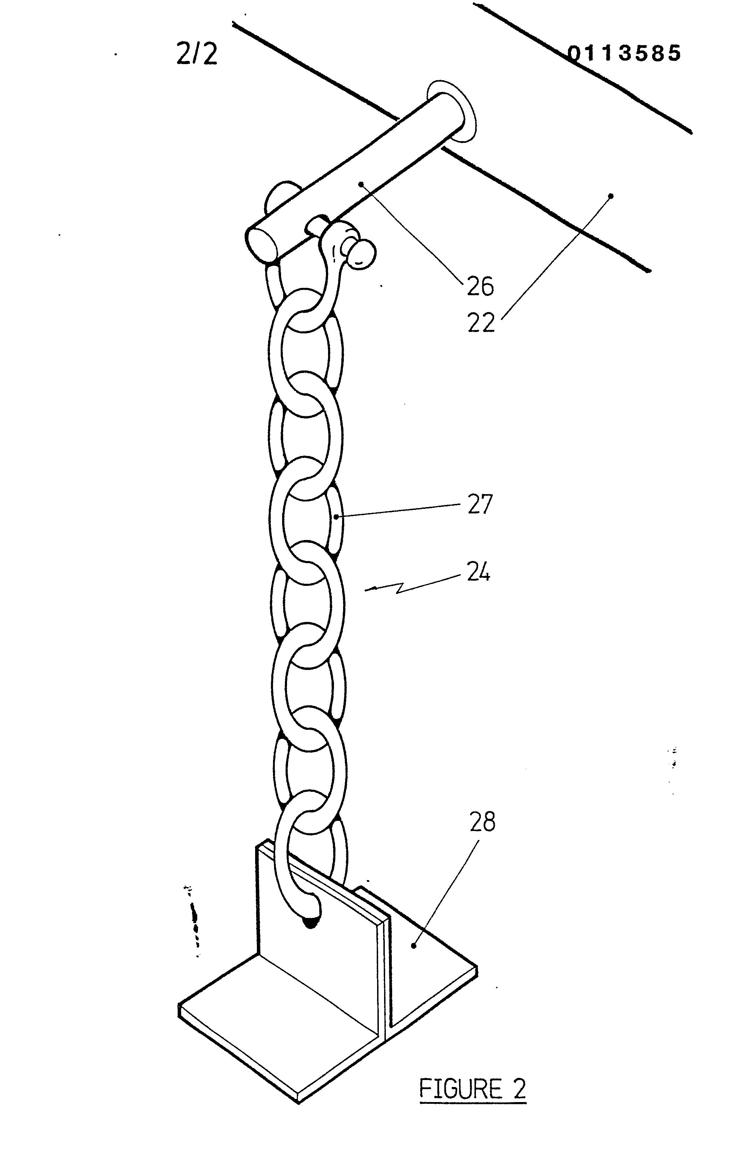

The manure spreading means 20 comprises a rotatable shaft 22 to which is attached a plurality of flails 24. Each flail 24 (see Figure 2) comprises a chain 27 and a T-shaped flail head 28 comprising two pieces of angle iron welded together. The rotatable shaft 22 is provided with a plurality of pins 26 to each of which a chain 27 may be secured. The shaft 22 is journalled and sealed at its ends, with journal 40 being secured to an L-shaped bracket 42 which is secured to the container 10. Transmission of power from the power take off shaft of the tractor to the shaft 22 is achieved by drive shaft 44 without the use of gearing.

In use, the manure spreader is attached to the tractor by means of the three connecting points 31,32 and 32a. The spreader may be raised or lowered by the hydraulic lift of the tractor. Because of the small size of the spreader, and the ease with which the spreader can be manoeuvred due to its direct mounting on the tractor, the spreader may be taken directly into cattle sheds to be filled with manure. The spreader may then be driven directly onto the land and the manure discharged by the spreading means 20. The spreader is also well adapted for use on hills due to its ability to spread manure during forward or reverse drive of the tractor.

The capacity of the spreader is approximately 0.3 cubic metres (0.5 tonnes) thus allowing the spreader to be carried by a small agricultural tractor of, for example, twenty horsepower.

To prevent the driver of the tractor from being splashed with manure during discharging, a detachable splash guard 55 is provided at the end of the spreader adjacent the tractor. The splash guard 55 comprises a single steel plate having a pair of lugs 56 which slot into brackets 58 on the container 10.

- 6 -

In an alternative embodiment of spreader according to the invention (not shown in the drawings) spring steel tines can be used instead of or with the flails 24.

In another alternative embodiment of spreader according to the invention, also not shown in the drawings, two elongated plates are secured at their edges to the rotatable shaft. The plates are provided with a plurality of holes to each of which a chain of a flail may be secured. The spreader may also be used to chop up and deliver animal foodstuffs.

CLAIMS:

1. A manure spreader comprising a container (10) having an opening (12) through which manure is charged and discharged; a rotatable shaft (22) in the container having a plurality of members (24) for discharging manure through the opening and means (44) for operatively connecting the rotatable shaft to a prime mover, characterised in that the container is secured to and supported within a supporting frame (16) which is adapted to be connected to and to be carried by the prime mover.

2. A manure spreader as claimed in Claim 1, having attachment means (30) comprising three connecting points (31, 32 and 32a) which are adapted for connection to the three point linkage of an agricultural tractor.

3. A manure spreader as claimed in either Claim 1 or Claim 2, in which the container is cylindrical and the supporting frame comprises two triangular end frames (17) each of which is secured to a respective end of the container and a plurality of elongated members (18) connecting the end frames.

4. A manure spreader as claimed in Claim 3, in which the three connecting points are provided at the vertices of one of the triangular end frames.

5. A manure spreader as claimed in any of the preceding claims, in which the members for discharging manure through the opening of the container comprise a plurality of flails (24).

6. A manure spreader as claimed in Claim 5, in which each flail comprises a chain (27) and a T-shaped flail head (28), one end of the chain being secured to the flail head, and the other end of the chain being secured to securing means (26) on the rotatable shaft.

7. A manure spreader as claimed in any one of the preceding claims, in which a splash guard (55) is mounted on the container adjacent the prime mover.

8. A manure spreader as claimed in Claim 7, in which the splash guard is detachably mounted on the container.

FIGURE 1

26

22

27

24

28

FIGURE 2

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | GB-A-2 017 473   (M. DUNNE)  <br><br>* Page 1, lines 55-89; figures 1, 2 * | 1,2,5, 6 | A 01 C   3/06 |
| A | | 3 | |
| Y | GB-A-2 073 566   (CHROMALLOY AMERICAN CO.) <br>*  Page 1, lines 89-113; figure 1 * | 6 | |
| A | | 1,3,5 | |

TECHNICAL FIELDS SEARCHED (Int. Cl. ³)

A 01 C   3/06

The present search report has been drawn up for all claims

| Place of search<br>BERLIN | Date of completion of the search<br>29-02-1984 | Examiner<br>BERGZOLL M C |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82